(19) Europäisches Patentamt
European Patent Office
Office européen des brevets

(11) **EP 1 858 177 A1**

(12) **EUROPEAN PATENT APPLICATION**
published in accordance with Art. 158(3) EPC

(43) Date of publication:
**21.11.2007 Bulletin 2007/47**

(51) Int Cl.:
***H04B 7/26*** *(2006.01)*

(21) Application number: **05720139.4**

(22) Date of filing: **07.03.2005**

(86) International application number:
**PCT/JP2005/003867**

(87) International publication number:
**WO 2006/095398 (14.09.2006 Gazette 2006/37)**

(84) Designated Contracting States:
**DE FR GB**

(71) Applicant: **FUJITSU LIMITED**
**Kawasaki-shi,**
**Kanagawa 211-8588 (JP)**

(72) Inventor: **NIBE, Keiji,**
**c/o FUJITSU LIMITED**
**Kawasaki-shi,**
**Kanagawa 2118588 (JP)**

(74) Representative: **Fenlon, Christine Lesley**
**Haseltine Lake**
**5th Floor, Lincoln House**
**300 High Holborn**
**London WC1V 7JH (GB)**

(54) **WIRELESS COMMUNICATION SYSTEM**

(57) A communication apparatus for transmitting a parameter (e.g. CQI) according to a receive environment to a transmission apparatus that switches a transmission rate based on the receive environment, comprising a receive environment measurement unit for measuring the receive environment, a fading environment measurement unit for measuring a fading environment in the communication apparatus, a parameter correction unit for correcting the parameter according to the receive environment based on the fading environment, and a transmission unit for transmitting the parameter to the transmission apparatus.

FIG. 1

Printed by Jouve, 75001 PARIS (FR)

**Description**

Technical Field

The present invention relates to a radio communication system, and more particularly to a communication apparatus for transmitting a parameter (e.g. CQI) according to a receive environment to a transmission apparatus which changes a transmission rate based on the receive environment, a transmission apparatus, and a mobile station.

Background Art

A W-CDMA (UMTS) mobile communication system is a radio communication system where a line is shared by a plurality of users, and is comprised of a core network 1, radio base station controllers (RNC: Radio Network Controllers) 2 and 3, multiplexers/demultiplexers 4 and 5, radio base stations (Node B) $6_1$ to $6_5$, and a mobile station (UE: User Equipment) 7.

The core network 1 is a network for routing in the mobile communication system, and can be constructed by an ATM exchange network, packet exchange network or router network, for example. The core network 1 is also connected to another public network (PSTN) so that the mobile station 7 can communicate with a fixed telephone, for example.

The radio base station controllers (RNC) 2 and 3 are positioned as the host apparatus of the radio base stations $6_1$ to $6_5$, and have functions to control $6_1$ to $6_5$ (e.g. management of radio resources to be used). The RNCs also have a handover control function to receive signals from one mobile station 7 from a plurality of slave radio base stations, selects data of which quality is better, and sends this data to the core network 1 side at handover.

The multiplexer/demultiplexers 4 and 5 are installed between the RNC and the radio base station, for demultiplexing the signals addressed to each radio station received from the RNCs 2 and 3, and outputting the demultiplexed signals to each radio base station, and also for multiplexing signals from each radio base station, and transferring the multiplexed signals to each RNC side.

The radio resources of the radio base stations $6_1$ to $6_3$ are managed by the RNC 2, and those of the radio base stations $6_4$ and $6_5$ by the RNC 3, so as to perform radio communication with the mobile station 7. The mobile station 7 exists in a radio area of the radio base station 6 so as to establish a radio line with the radio base station 6, and performs communication with another communication apparatus via the core network 1.

An interface between the core network 1 and the RNCs 2 and 3 is called the Iu interface, an interface between the RNC 2 and RNC 3 is called the Iur interface, an interface between the RNCs 2 and 3 and each radio base station 6 is called the Iub interface, and an interface between the radio base station 6 and the mobile station 7 is called the Uu interface, and a network formed by the apparatus 2 to 6 in particular is called a radio access network (RAN). A line between the core network 1 and the RNCs 2 and 3 is shared by the Iu and Iur interfaces, and a line between the RNCs 2 and 3 and the multiplexer/demultiplexers 4 and 5 is shared by the Iub interfaces for a plurality of radio stations.

The above is a description of a general mobile communication system, but an HSDPA (High-Speed Downlink Packet Access) method may be used as a technology that allows high-speed data transmission in the down direction (see the Non Patent Document 1 and 2). Now HSDPA will be described in brief.

· HSDPA

HSDPA uses Adaptive Modulation and Coding (AMC), and is characterized in that a QPSK modulation scheme and 16QAM scheme are adaptively switched according to the radio environment between a radio base station and a mobile station.

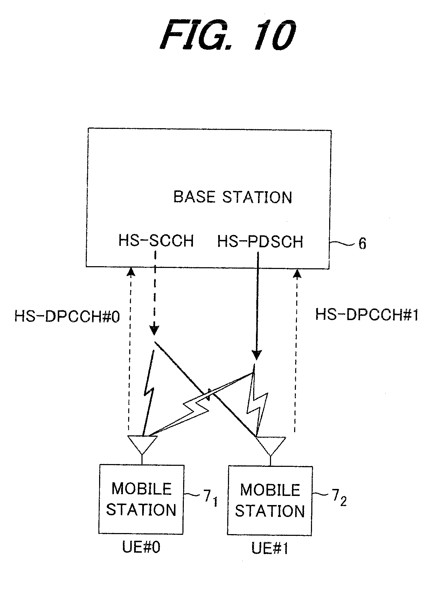

HSDPA also uses H-ARQ (Hybrid Automatic Repeat reQuest). According to H-ARQ, if a mobile station detects an error in a data received from a radio base station, the mobile station requests the radio base station to retransmit the data by transmitting a NACK signal. The radio base station, which received this retransmission request, retransmits the data, and the mobile station performs error correction decoding using the data already received and this retransmitted received data. In this way, in H-ARQ, the gain of error correction decoding is increases by effectively using the data already received even if an error exists, and the retransmission count can be suppressed as a result. If an ACK signal is received from a mobile station, retransmission is unnecessary since data transmission succeeded, so the next data is transmitted. The main radio channels used for HSDPA are (1) HS-SCCH (High Speed-Shared Control Channel), (2) HS-PDSCH (High Speed-Physical Downlink Shared Channel) and (3) HS-DPCCH (High Speed-Dedicated Physical Control Channel) as shown in Fig. 10.

HS-SCCH and HS-PDSCH are both shared channels in the down direction (that is, down links from a radio base station to a mobile station), and HS-SCCH is a control channel for sending various parameters on data to be transmitted via HS-PDSCH. In other words, HS-SCCH is a channel to notify that data is transmitted via HS-PDSCH to the mobile station. The various parameters are, for example, destination information on a mobile station to which data is sent, transmission bit rate information, modulation scheme information to indicate the modulation scheme based on which data is sent via HS-PDSCH, the number of spreading codes allocated (number of codes), and the pattern of rate matching used for the transmission data.

HS-DPCCH is a dedicated control channel in the up direction (an uplink from a mobile station to a radio base station), and is used when the mobile station sends the receive result (ACK signal, NACK signal) to the radio base station according to the presence of error in the data received via HS-PDSCH. In other words, HS-DPCCH is a channel used for sending the receive result of the data received via HS-PDSCH. If the mobile station failed to receive the data (e.g. receive data has a CRC error), a NACK signal is sent from the mobile station, so the radio base station executes retransmission control.

HS-DPCCH is also used to send a CQI (Channel Quality Indicator) from a mobile station to a radio base station. That is, the mobile station measures the receive quality (e.g. SIR) of a signal received from the radio base station and sends this receive quality to the radio base station as a CQI (Channel Quality Indicator). In other words, CQI is an information for the mobile station to report on the receive environment to the base station, where CQI = 1 to 30, and the value of CQI is decided so that the block error rate BLER does not exceed 0.1 under the receive environment when the base station controls the transmission of data based upon this CQI.

The radio base station judges the conditions of the radio environment in the down direction based on the received CQI, and switches to a modulation scheme whereby data can be transmitted faster if the conditions of the radio environment are good, or switches to a modulation scheme whereby data can be transmitted slower if conditions are not very good (this means that the radio base station performs adaptive modulation). Actually the base station has a CQI table for defining formats with different transmission speeds according to CQI = 1 to 30, and determines parameters (e.g. transmission speed, modulation scheme, number of multiplexed codes) according to CQI from the CQI table, and notifies this information to the mobile station via HS-SCCH, and also transmits data to the mobile station via HS-PDSCH based on these parameters.

· Channel structure

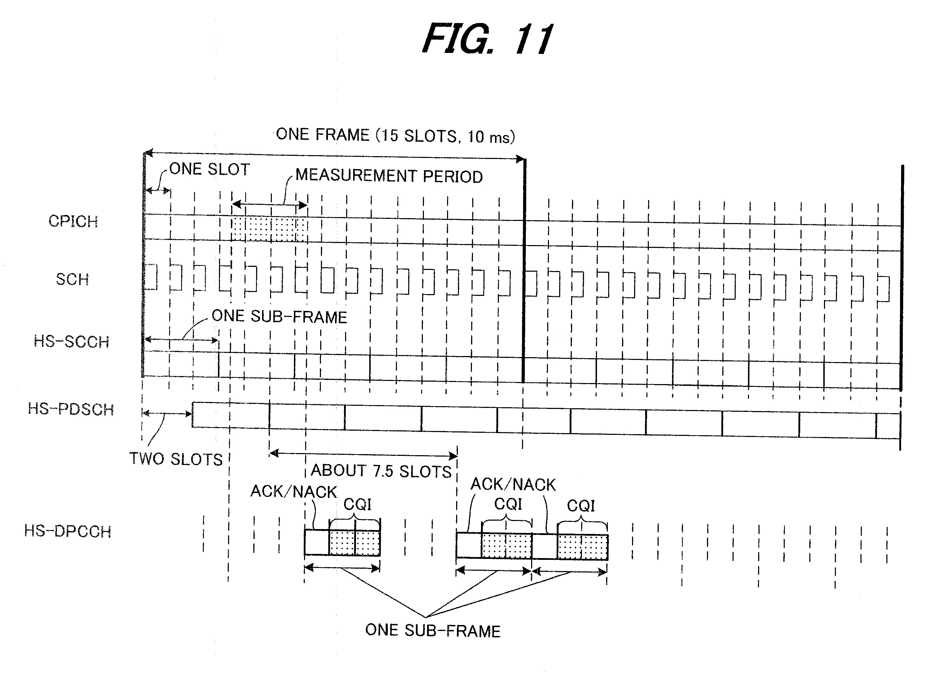

Fig. 11 is a diagram depicting the timings of the channels in the HSDPA system. Code division multiplexing is used in W-CDMA, so each channel is separated by codes. CPICH (Common Pilot Channel) and SCH (Synchronization Channel) are both down direction shared channels. CPICH is a channel for a mobile station to use for channel estimation and cell search, for example, and is a channel for transmitting pilot signals. SCH is a synch channel, and strictly speaking there are two types of SCH: P-SCH (Primary SCH) and S-SCH (Secondary SCH), where synch signal is transmitted in bursts using the first 256 chips of each slot. This synch signal of the SCH is received by a mobile station which performs a well known three-step cell search, and is used for establishing slot synchronization and frame synchronization and for identifying a base station code (scramble code). The length of SCH is 1/10 of one slot, but is shown wider than this in Fig. 11. The remaining 9/10 is P-CCPCH (Primary Common Control Physical Channel).

Now the timing relationship of the channels will be described. In each channel, 15 slots constitute one frame (10 ms), and one frame has a length equivalent to a 2560 chip length. As described above, CPICH is used as a reference for other channels, so the beginning of the SCH and HS-SCCH frames matches the beginning of the CPICH frame. The beginning of the HS-PDSCH frame, on the other hand, is two slots behind HS-SCCH, and this is to allow a mobile station to receive the modulation scheme information via HS-SCCH and then to demodulate HS-PDSCH by a demodulation scheme corresponding to the received modulation scheme. In HS-SCCH and HS-PDSCH, three slots constitute one sub-frame.

HS-DPCCH is an up direction channel, and the first slot of the sub-frame is used for sending the ACK/NACK signal to indicate the receive result of HS-PDSCH from the mobile station to the radio base station at about 7.5 slots after the reception of HS-PDSCH. The second and third slots are used for regularly sending CQI information for adaptive modulation control to the base station as feedback. Here the CQI information to be transmitted is calculated based on the receive environment (e.g. SIR measurement result of CPICH) measured in a period from four slots before to a slot before the CQI transmission.

· Configuration of mobile station

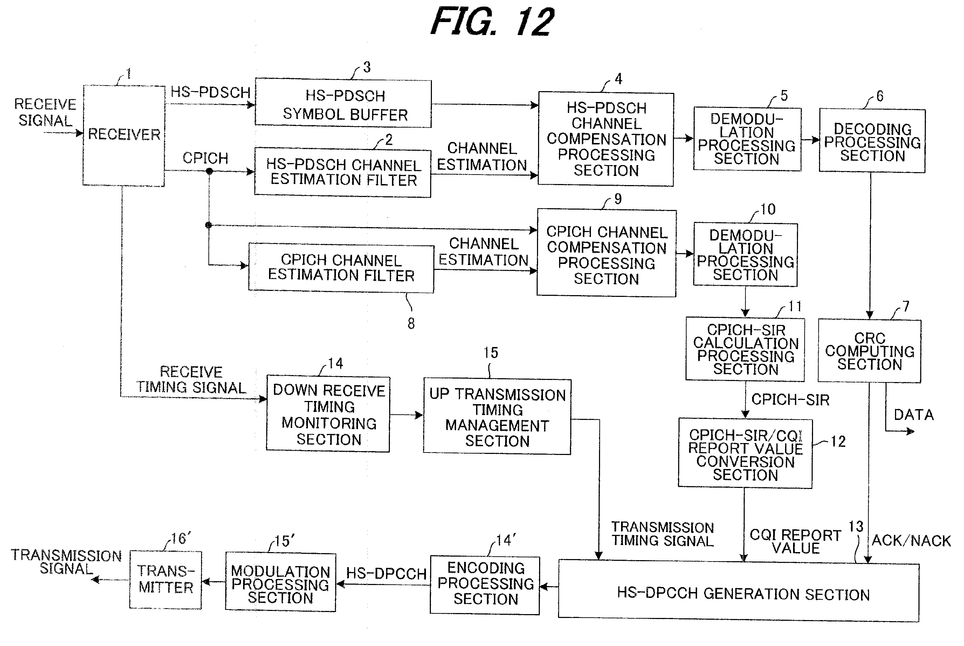

Fig. 12 is a diagram depicting a configuration of a key section of a conventional mobile station. A radio signal sent from a base station is received by an antenna and is input to a receiver 1. The receiver 1 down-converts the radio signal into a base band signal, and performs such processing as orthogonal demodulation, AD conversion and despread on the obtained base band signal, and outputs an HS-PDSCH symbol signal, CPICH symbol signal and receive timing signals (frame synchronization, slot synchronization signals), for example.

A HS-PDSCH channel estimation filter 2 calculates a mean value of the total 20 symbols of the CPICH symbol signals, that are the previous 10 symbols of the current symbol and subsequent 10 symbols, including the current symbol, and outputs this mean value as a channel estimate value sequentially at the symbol cycle. Since one slot of CPICH has 10 symbols, the above mentioned 10 symbols are equivalent to one slot.

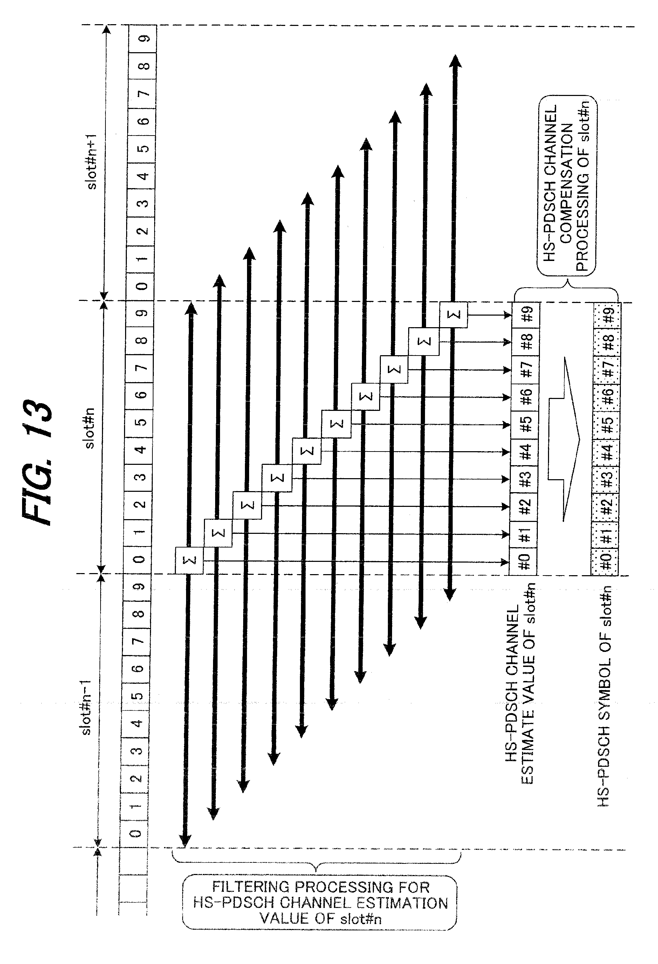

Fig. 13 is a diagram depicting an operation of the HS-PDSCH channel estimation filter 2, and a channel estimate value of the first symbol of the current slot slot#n is a mean value of the total 20 symbols of the CPICH symbol signal, that are the first to tenth symbol of the just previous slot slot#n-1 and the first to tenth symbols of the current slot slot#n. The channel estimate value of the second symbol of the current slot slot#n is a mean value of the total 20 symbols of the CPICH symbol signal, that are the second to tenth symbol of the just previous slot slot#n-1, the first to tenth symbol of the current slot slot#n and the first symbol of the next slot slot#n+1, and the channel estimate value of the tenth symbol of the current slot slot#n is a mean value of the total 20 symbols of the CPICH symbol signal, that are the tenth symbol of the just previous slot slot#n-1, the first to tenth symbol of the current slot slot#n and the first to ninth symbol of the next slot slot#n+1. In this way, a mean value of a plurality of channel estimate values on both sides of the interested symbol is calculated to determine the channel estimate value of this interested symbol, so highly accurate channel estimation becomes possible.

Referring back to Fig. 12, an HS-PDSCH symbol buffer 3 holds the HS-PDSCH symbol for one slot period, and inputs it to an HS-PDSCH channel compensation processing section 4. In other words, the HS-PDSCH symbol is delayed for one slot until the channel estimate value is determined, and then is input to the HS-PDSCH channel compensation processing section 4. The HS-PDSCH channel compensation processing section 4 performs channel compensation processing on the HS-PDSCH symbol signal using the channel estimate value, as shown at the bottom of Fig. 13, and outputs the processed HS-PDSCH symbol signal. A demodulation processing section 5 demodulates the HS-PDSCH symbol which is the channel-compensated symbol signal, a decoding processing section 6 performs error correction decoding processing on the demodulated signal, and a CRC computing section 7 performs CRC computation for each block to judge whether an error exists in the decoded result, and outputs the decoded data and generates ACK if no error is detected, or generates NACK and inputs it to an HS-DPCCH generation section 13 if an error is detected.

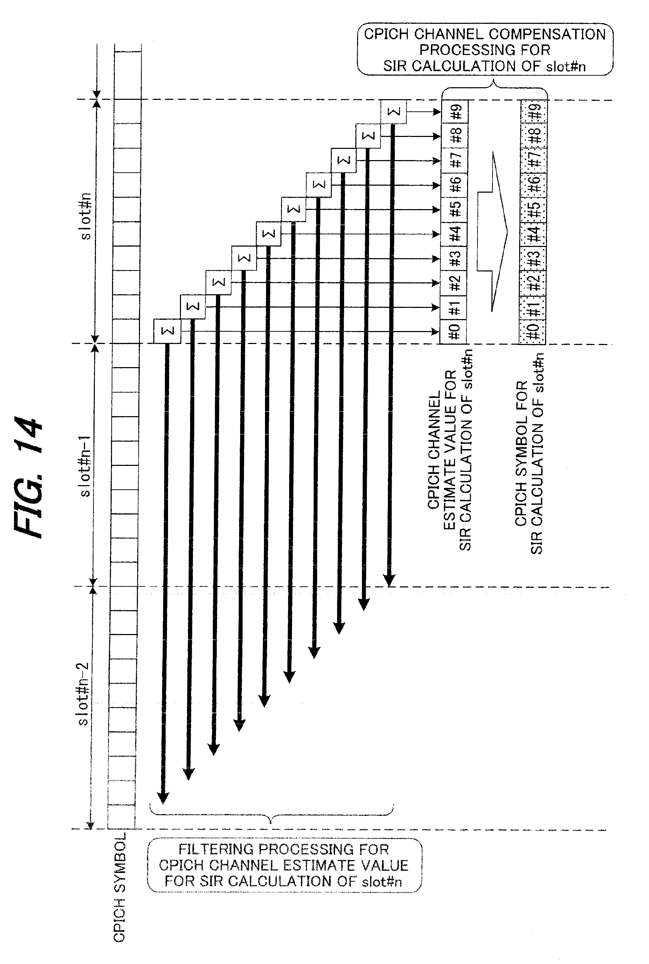

A CPICH channel estimation filter 8 for SIR calculation calculates a mean value of the previous 20 symbols of the CPICH symbol signal including the current symbol, and outputs this mean value sequentially at the symbol cycle as a channel estimate value. Fig. 14 is a diagram depicting an operation of the CPICH channel estimation filter 8, where a channel estimate value of the first symbol of the current slot slot#n is a mean value of the total 20 symbols of the CPICH symbol, that are the second to the tenth symbols of the previous slot slot#n-2 and the first to tenth symbols of the just previous slot slot#n-1 and the first symbol of the current slot slot#n. A channel estimate value of the second symbol of the current slot slot#n is a mean value of the total 20 symbols of the CPICH symbol signal, that are the third to tenth symbols of the previous slot slot#n-2, the first to tenth symbols of the just previous slot #n-1, and the first to second symbols of the current slot slot#n, and a channel estimate value of the tenth symbol of the current slot slot#n is a mean value of the total 20 symbols of the CPICH symbol, that are the first to tenth symbols of the just previous slot slot#n-1, and the first to tenth symbols of the current slot slot#n. Unlike the HS-PDSCH channel estimation filter 2, the CPICH channel estimation filter 8 for SIR calculation cannot calculate a channel estimate value using the total 20 symbols of the CPICH symbol signal, that are the just previous subsequent 10 symbols of the current symbol and the subsequent 10 symbols including the current symbol, and the reason for this will be described later.

Referring back to Fig. 12, a CPICH compensation processing section 9 for SIR calculation performs channel compensation processing on the CPICH symbol signal using a CPICH channel estimate value for SIR calculation, as shown at the bottom of Fig. 14, a demodulation processing section 10 demodulates the CPICH symbol using the channel-compensated symbol signal, and a CPICH-SIR calculation processing section 11 performs a known SIR calculation processing using the demodulated CPICH symbol, and outputs CPICH-SIR, which indicates the receive environment of the mobile station.

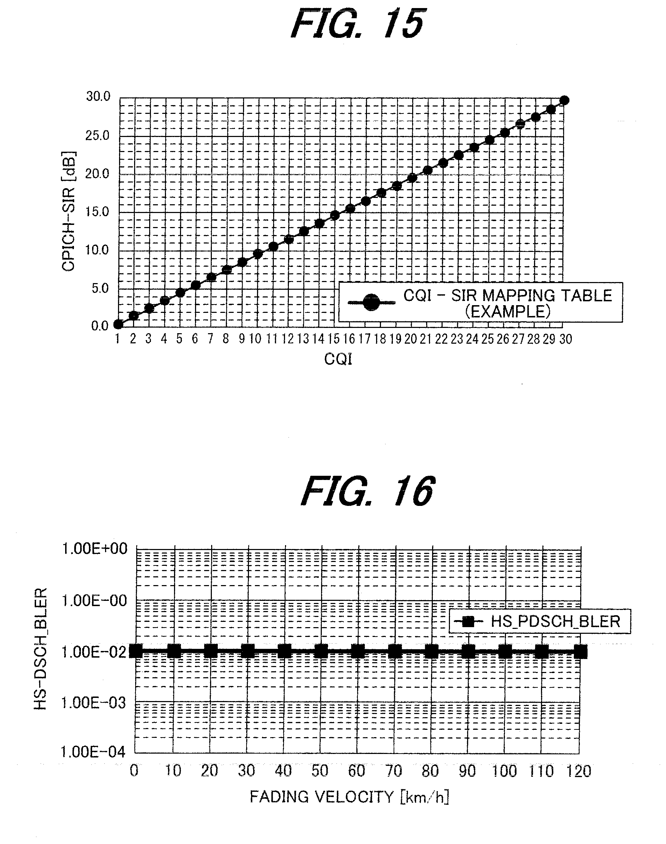

A CPICH-SIR/CQI report value conversion section 12, which has a correspondence table of CPICH-SIR and CQI, as shown in Fig. 15, determines the CQI report value according to the CPICH-SIR which was input from this table, and inputs the determined CQI repeat value to the HS-DPCCH generation section 13.

In parallel with the above processing, a downlink receive timing monitoring section 14 monitors the downlink timing based on a receive timing signal (frame synchronization signal, slot synchronization signal), and an uplink transmission timing management section 15 inputs a transmission timing signal to the HS-DPCCH generation section 13. As described in Fig. 11, the HS-DPCCH generation section 13 creates HS-DPCCH, which includes for each sub-frame a CQI report value according to the CPICH-SIRs at the first to fourth slot before the sub-frame, and also includes an ACK/NACK signal, an encoding processing section 14', and encodes the HS-DPCCH and inputs the encoded results to a modulation processing section 15'. The modulation processing section 15' performs spread processing, DA conversion and orthogonal modulation processing, and a transmitter 16' performs frequency conversion on the base band signal into an RF signal, and sends the RF signal to a base station via the antenna. The base station, which is not illustrated, demodulates the HS-DPCCH, determines a transport block size, number of multiplexed codes and a modulation method from the CQI table based on the CQI report value, sends the data via HS-PDSCH according to this information, and controls the retransmission based on ACK/NACK.

As mentioned above, the HS-PDSCH channel estimation filter 2 delays the HS-PDSCH symbol by one slot, so that a mean value of the total 20 symbols of the CPICH symbol, that are the previous 10 symbols of the current symbol and the subsequent 10 symbols including the current symbol, is calculated, and uses this mean value as the channel estimate value of the current symbol, so highly accurate channel estimation is possible. The CPICH channel estimation filter 8, on the other hand, cannot calculate a channel estimate value using the subsequent 10 CPICH symbols including the current symbol, unlike the HS-PDSCH channel estimation filter 2. This is because the mobile station must determine the CQI report value based on an SIR which is measured using CPICH symbols included in three slots each of which is the first to fourth slot before the current slot, and send this CQI report value at the time of the current slot. That is the CPICH channel estimation filter 8 has to output the channel estimation value without delay, therefore it cannot are the subsequent 10 CPICH symbols.

For this reason, the CPICH channel estimate value for SIR calculation is not as accurate as the HS-PDSCH channel estimate value. This shortcoming is particularly remarkable in an environment where the channel estimation result changes in a short time, due to high-speed fading, for example, and the channel estimate value in the past and the current channel estimate value are different. In other words, in a high-speed fading environment, the accuracy of the CPICH channel estimate value for SIR calculation is much lower than the HS-PDSCH channel estimate value, and the receive quality of a CPICH symbol for SIR calculation deteriorates considerably compared with the receive quality of the HS-PDSCH symbol.

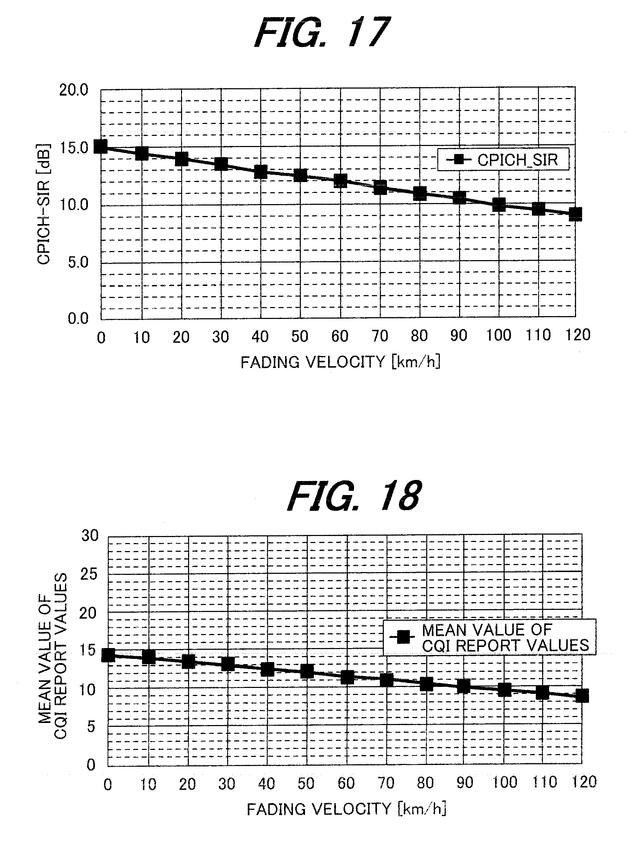

Fig. 16 is a graph showing the block error rate BLER characteristic of an HS-PDSCH with respect to the fading velocity when a fixed format reception is executed by the mobile station, and Fig. 17 is a graph showing the CPICH-SIR characteristic with respect to the fading velocity, and Fig. 18 is a graph showing the CQI report values with respect to the fading velocity when CPICH-SIR is converted into a CQI report value using a prior art. Here, the fixed format reception means the mobile station receives data which is sent without changing the block size, modulation scheme and number of multi-codes.

As Fig. 16 and Fig. 17 clearly show, the receive quality of the CPICH for SIR calculation deteriorates as the fading velocity increases, compared with the receive quality of the HS-PDSCH. Therefore the CQI report values are reported as values that are lower than the extract CQI report values during high-speed fading, as shown in Fig. 18. As a result, the base station sends data to the mobile station using HS-PDSCH, at a low transmission rate and with high error correction capability. Therefore the block error rate BLER of the HS-PDSCH becomes much lower than the specified value 0.1, which is unnecessarily high quality, and the throughput characteristic of the communication system deteriorates.

From the foregoing, it is an object of the present invention to send data with a transmission rate according to the receive quality of the HS-PDSCH, even under a fading environment.

It is another object of the present invention to determine and report the CQI which is adapted to the fading environment. It is still another object of the present invention to correct the CQI based on the fading velocity, and to determine the data transmission method (transmission rate) of HS-PDSCH based on this corrected CQI.

Non Patent Document 1: 3G TS 25.212 (Third Generation Partnership Project: Technical Specification Group Radio Access Network; Multiplexing and Channel Coding (FDD)
Non Patent Document 2: 3G TS 25.214 (Third Generation Partnership Project: Technical Specification Group Radio Access Network; Physical Layer Procedures (FDD).

Disclosure of the Invention

The present invention is a communication apparatus for transmitting a parameter according to a receive environment to a transmission apparatus that switches a transmission rate based on the receive environment, comprising a receive environment measurement unit for measuring the receive environment, a fading environment measurement unit for measuring a fading environment of the communication apparatus, a parameter correction unit for correcting the parameter according to the receive environment based on the fading environment, and a transmission unit for transmitting the parameter to the transmission apparatus.

In the communication apparatus, the parameter correction unit comprises a receive environment measurement value correction unit for correcting the receive environment measurement value based on the fading environment, and a parameter generation unit for generating the parameter according to the corrected receive environment measurement value.

Also in the communication apparatus, the parameter correction unit further comprises a receive environment measurement value/parameter conversion table that is a conversion table for converting the receive environment measurement value into the parameter, and is created corresponding to each of a plurality of fading environments, and a conversion unit for converting the receive environment measurement value into the parameter using the table according to the measured fading environment.

The present invention is a mobile station for transmitting a CQI according to a receive environment to a base station that switches a transmission rate based on the receive environment, comprising a receive quality measurement unit for measuring the receive environment based on a receive quality of a CPICH symbol, a fading velocity measurement unit for measuring a fading environment in the mobile station using a fading velocity, a CQI correction unit for correcting a CQI according to the receive quality based on the fading velocity, and a transmission unit for transmitting the corrected CQI to a transmission apparatus.

The present invention is a transmission apparatus for obtaining a parameter according to a receive environment of a receive apparatus and switching a transmission rate based on the parameter, comprising a receive unit for receiving the parameter from the receive apparatus, a fading environment measurement unit for measuring a fading environment of the receive apparatus, a parameter correction unit for correcting the parameter based on the fading environment, and a transmission control unit for switching a transmission rate based on the corrected parameter.

According to the present invention, a CQI adapted to the fading environment can be determined, so data can be transmitted at a transmission rate according to the receive quality of the HS-PDSCH even under a fading environment, and the throughput of the communication system can be improved without making quality unnecessarily high unlike the case of the prior art.

Brief Description of the Drawings

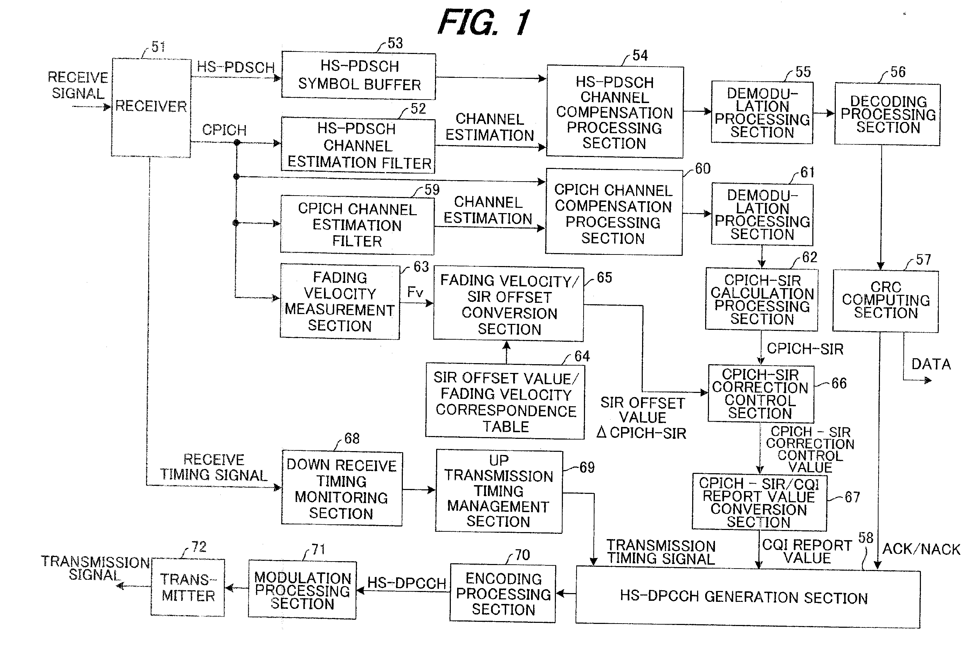

Fig. 1 is a block diagram depicting a mobile station according to the first embodiment;

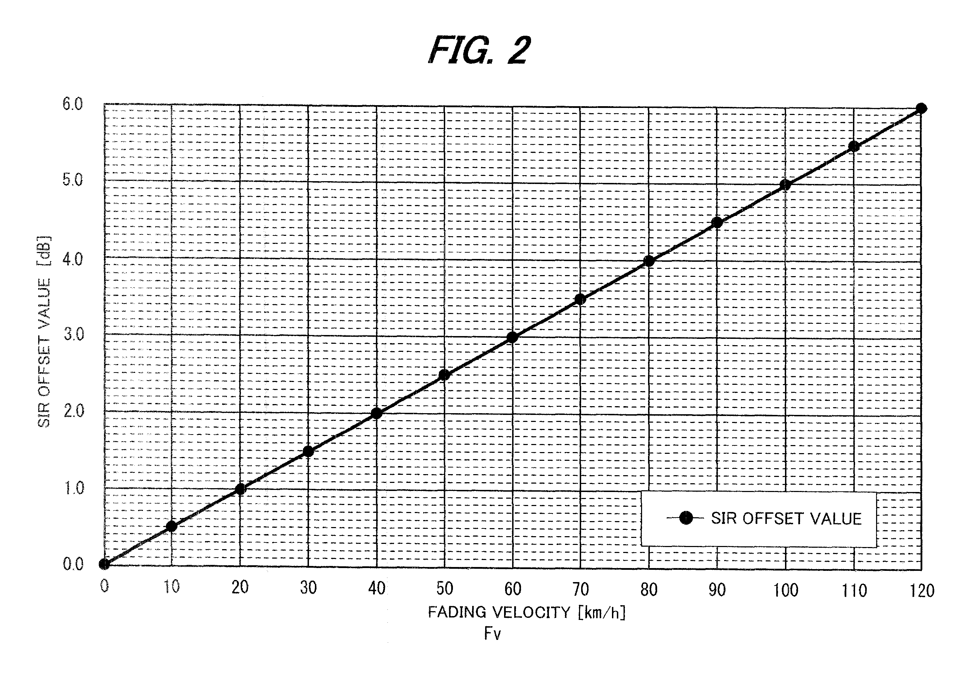

Fig. 2 shows an example of an SIR offset value/fading velocity correspondence table;

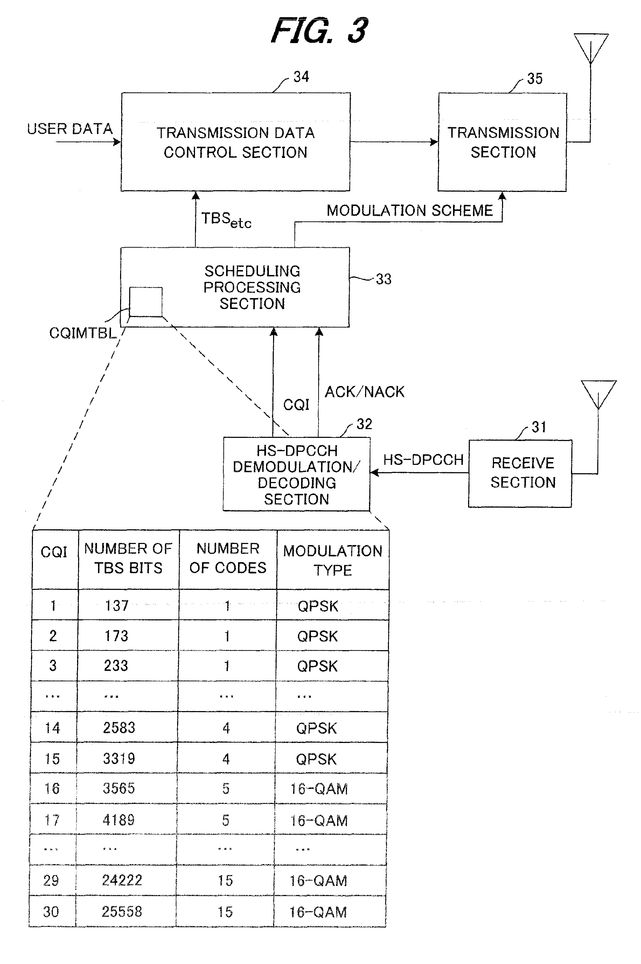

Fig. 3 is a block diagram depicting a key section of a base station;

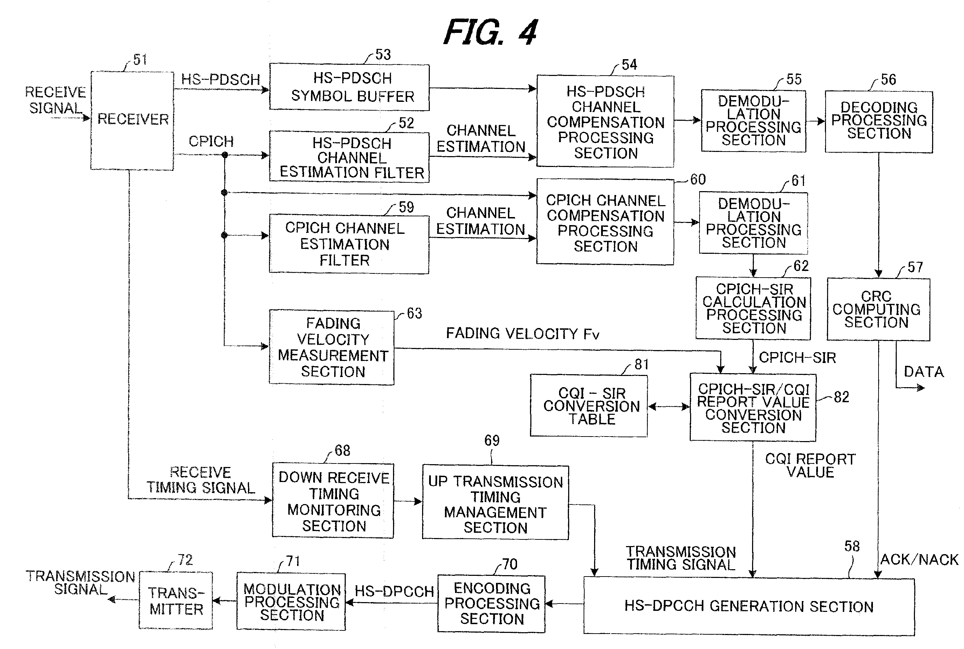

Fig. 4 is a block diagram depicting a mobile station according to the second embodiment;

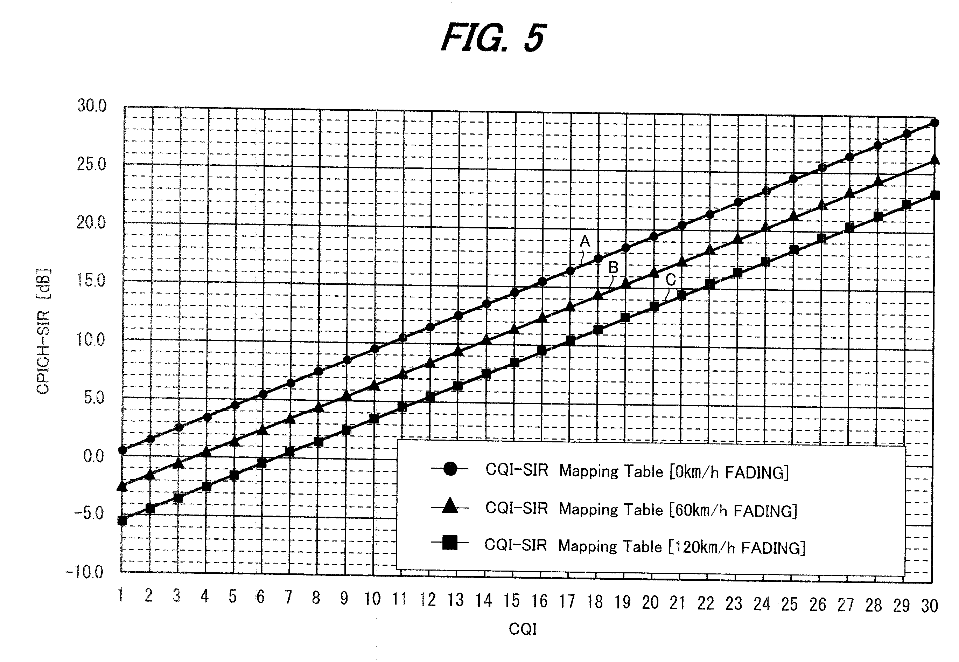

Fig. 5 is a diagram depicting a CQI/CPICH - SIR conversion table for converting CPICH - SIR into CQI;

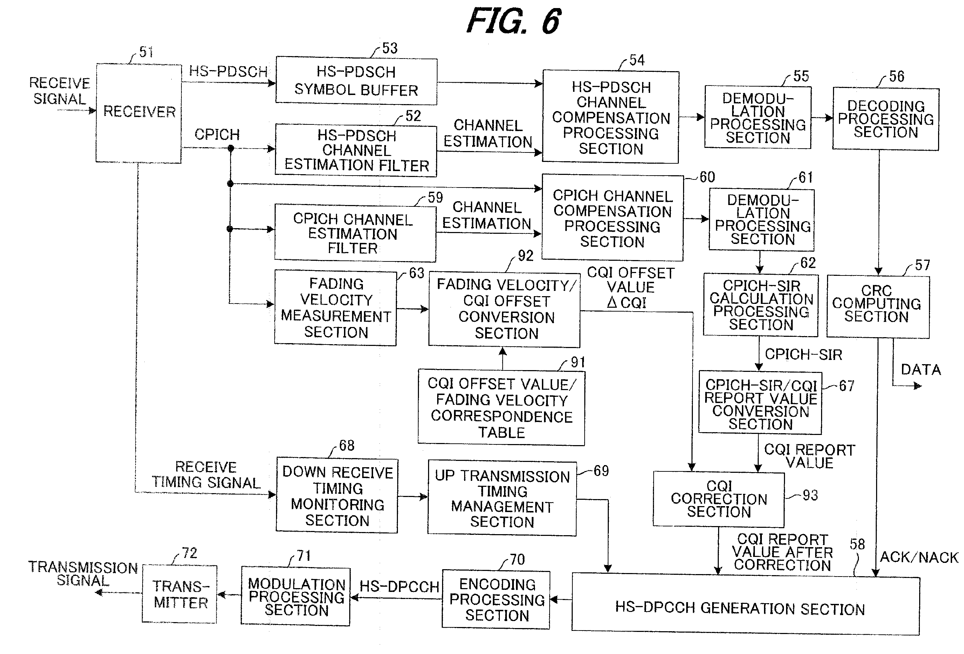

Fig. 6 is a block diagram depicting a mobile station according to the third embodiment;

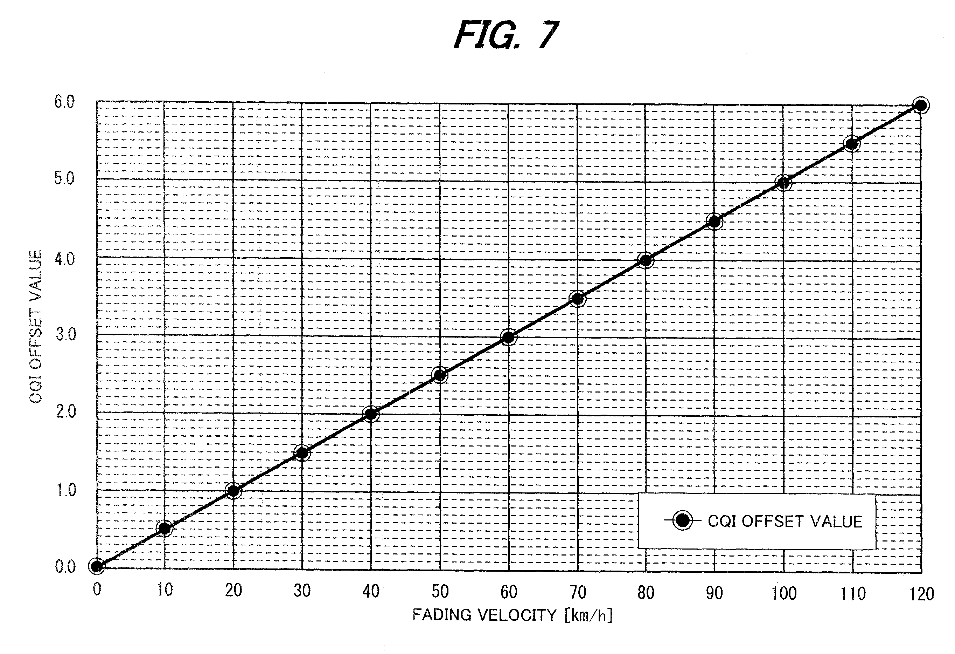

Fig. 7 shows an example of a CQI offset value/fading velocity correspondence table;

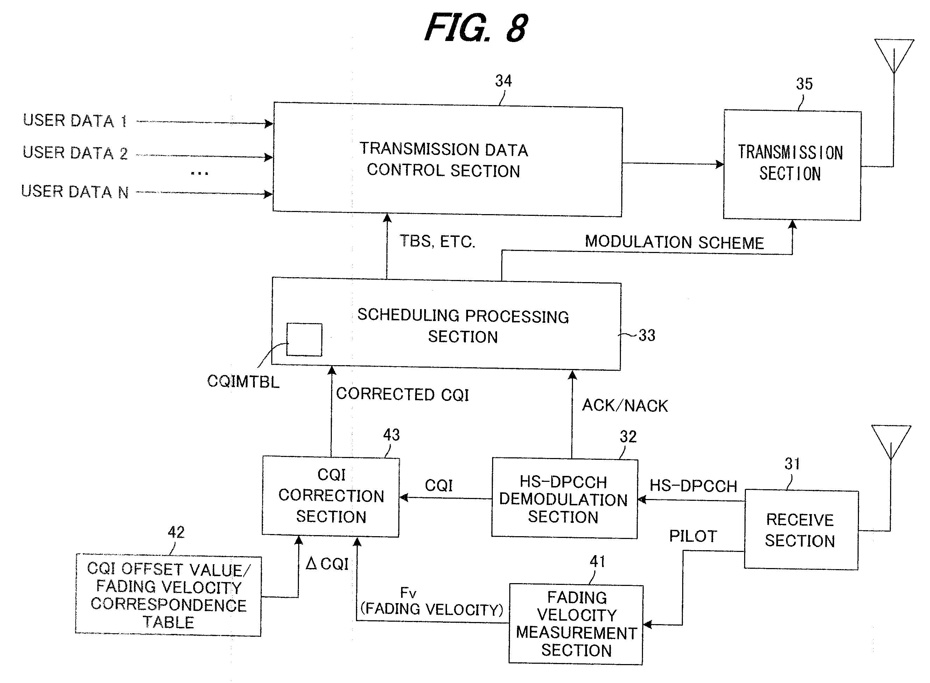

Fig. 8 is a block diagram depicting a base station according to the fourth embodiment;

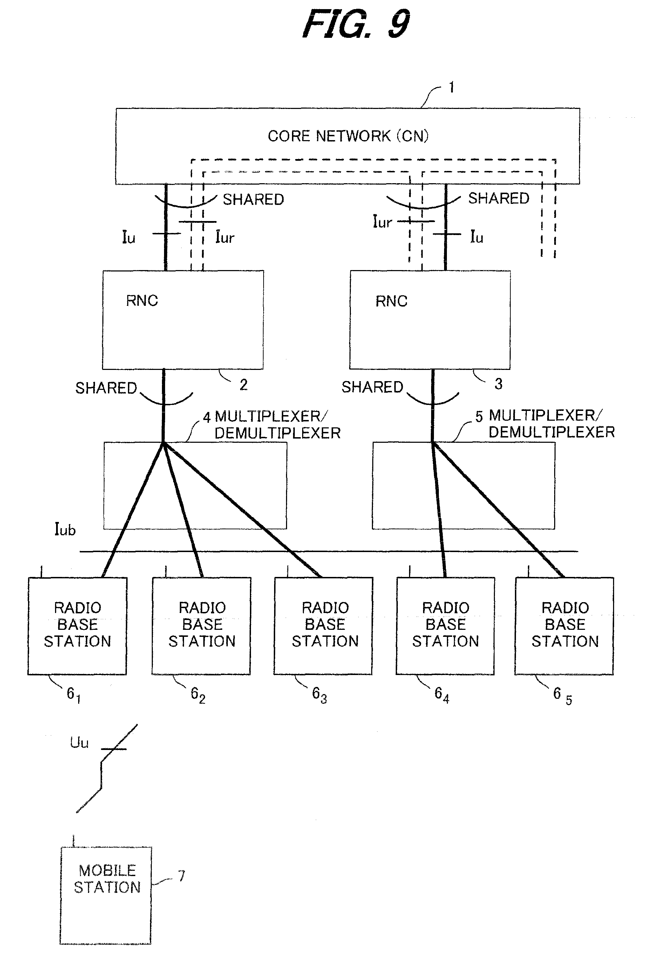

Fig. 9 is a block diagram depicting a W-CDMA mobile communication system;
Fig. 10 is a diagram depicting the main radio channels used for HSDPA;
Fig. 11 is a diagram depicting the timing of channels in an HSDPA system;
Fig. 12 is a block diagram depicting a key section of a conventional mobile station;
Fig. 13 is a diagram depicting a channel estimation of HS-PDSCH;
Fig. 14 is a diagram depicting a channel estimation of CPICH for SIR calculation;
Fig. 15 is a CPICH -SIR/CQI report value conversion table;
Fig. 16 is a graph showing the block error rate BLER characteristic of HS-PDSCH with respect to the fading velocity in fixed format reception;
Fig. 17 is a graph showing the CPICH-SIR characteristic with respect to fading velocity; and
Fig. 18 is a graph showing a CQI report value with respect to the fading velocity when CPICH-SIR is converted into a CQI report value using prior art.

Best Mode for Carrying Out the Invention

(A) First embodiment

Fig. 1 is a block diagram depicting a mobile station of the first embodiment.
A radio signal, which is sent from a base station, is received by an antenna and is input to a receiver 51. The receiver 51 down-converts the radio signal into a base band signal, performs such processing as orthogonal demodulation, AD conversion and despread on the obtained base band signal, and outputs an HS-PDSCH symbol signal, CPICH symbol signal and receive timing signal (frame synchronization, slot synchronization signal), for example. An HS-PDSCH channel estimation filter 52 calculates a mean value of the total 20 symbols of the CPICH, that are the previous 10 symbols of a current symbol, and the subsequent 10 symbols including the current symbol, and outputs the mean value as a channel estimate value sequentially at the symbol cycle (see Fig. 13).

An HS-PDSCH symbol buffer 53 holds an HS-PDSCH symbol for a one slot period (10 symbols period), and inputs it to an HS-PDSCH channel compensation processing section 54. In other words, the HS-PDSCH symbol buffer 53 delays the HS-PDSCH symbol for one slot period until the HS-PDSCH channel estimate value is determined, and inputs it to the HS-PDSCH channel compensation processing section 54. The HS-PDSCH channel compensation processing section 54 performs channel compensation processing on the HS-PDSCH symbol signal using the HS-PDSCH channel estimate value calculated by the HS-PDSCH channel estimation filter 52, and outputs it. A demodulation processing section 55 demodulates the HS-PDSCH symbol using the channel - compensated symbol signal, a decoding processing section 56 performs error correction decoding processing on the demodulated signal, and a CRC computing section 57 performs CRC computation for each transport block, to judge whether an error exists in the decoded result and outputs the decoded data and generates ACK if no error is detected, or generates NACK and inputs it to an HS-DPCCH generation section 58 if an error is detected.

A CPICH channel estimation filter 59 for SIR calculation calculates a mean value of the previous 20 symbols of the CPICH symbol signal, including the current signal, and outputs this mean value sequentially at the symbol cycle as a channel estimate value for SIR calculation (see Fig. 14). A CPICH channel compensation processing section 60 performs channel compensation processing on the CPICH symbol signal using the CPICH channel estimate value for SIR calculation, and a demodulation processing section 61 demodulates the CPICH symbol using the channel - compensated symbol signal, and a CPICH-SIR calculation processing section 62 performs a known SIR calculation processing using the demodulated CPICH symbol to calculate the SIR (CPICH-SIR) which is a receive quality of CPICH, and outputs the calculation result.

A fading velocity measurement section 63 measures a fading environment of the mobile station by a known method. For example, a phase fluctuation ratio of the CPICH signal per unit time (one symbol cycle) is measured, and the fading velocity $F_v$ at the mobile station is measured as the fading environment based on the phase fluctuation ratio. If this mobile station has a GPS (Global Positioning System), the fading velocity $F_v$ is measured based on the moving distance per unit time. In an SIR offset value/fading velocity correspondence table 64, the correspondence of fading velocities $F_v$ and SIR offset values is stored in advance. Fig. 2 shows an example of the SIR offset value/fading velocity correspondence table, which is created by measuring the difference between SIR at a time when the fading velocity $F_v$ is 0 and SIR at a time when the fading velocity $F_v$ is a predetermined fading velocity, setting this difference as an SIR offset at a predetermined fading velocity and changing the predetermined fading velocity (see Fig. 17).

A fading velocity/SIR offset conversion section 65 determines the SIR offset value ΔCPICH-SIR according to the measured fading velocity $F_v$ from the SIR offset value/fading velocity correspondence table 64, and outputs it. A CPICH-SIR correction control section 66 corrects CPICH-SIR which is output from the CPICH-SIR calculation processing section 62 by expression

$$\mathtt{CPICH\text{-}SIR = CPICH\text{-}SIR + \Delta CPICH\text{-}SIR}$$

The corrected CPICH-SIR can be regarded as SIR of the HS-PDSCH symbol even under a fading environment.

A CPICH-SIR/CQI report value conversion section 67 determines a CQI report value according to the corrected CPICH-SIR which was corrected using the conversion table (see Fig. 15), and inputs it to the HS-DPCCH generation section 58. Parallel with this, a down receive timing monitoring section 68 monitors the down timing based on a receive timing signal (frame synchronization, slot synchronization signal), and an up transmission timing management section 69 inputs a transmission timing signal to the HS-DPCCH generation section 58. As described in Fig. 11, the HS-DPCCH generation section 58 creates HS-DPCCH which includes a CQI report value according to CPICH-SIR at the first to fourth slot before each sub-frame, and has an ACK/NACK signal, and an encoding processing section 70 encodes the HS-DPCCH and inputs it to a modulation processing section 71. The modulation processing section 71 performs spread processing, DA conversion and orthogonal modulation processing, and a transmitter 72 converts the base band signal into an RF signal frequency, and transmits the RF signal to the base station via an antenna.

Fig. 3 is a block diagram depicting a key section of the base station. A receive section 31 receives a radio signal which is sent from a mobile station, down-converts it into a base band signal, then performs such processing as orthogonal demodulation, AD conversion and despread diffusion on the base band signal, and outputs the symbol signals of the HS-DPCCH symbol and the symbol signals of the other channels. An HS-DPCCH demodulation/decoding section 32 demodulates and decodes the symbol signal of HS-DPCCH, and inputs a CQI report value and ACK/NACK signal to a scheduling processing section 33.

The scheduling processing section 33 performs retransmission control based on ACK/NACK, and determines a transmission rate based on the CQI report value, and sets it in the transmission data control section 34 and the transmission section 35. In other words, the scheduling processing section 33 determines a transport block size (number of bits) TBS, number of multi-codes and modulation type according to the CQI report value from the internal CQI mapping table CQIMTBL, and sets this information in the transmission data control section 34 and the transmission section 35. The transmission data control section 34 creates the data of HS-PDSCH based on the TBS, number of multi-codes and other information, and inputs it to the transmission section 35, and the transmission section 35 performs spread processing and DA conversion processing on the input data, and modulates the data using a modulation scheme specified by the scheduling processing section 33, and performs frequency up-conversion on the data, and sends it via the antenna. The transmission data control section 34 and the transmission section 35 create HS-SCCH control data and send it previous to HS-PDSCH.

According to the first embodiment, the CPICH-SIR correction control section 66 (Fig. 1) can accurately output the SIR of the HS-PDSCH symbol even under a fading environment, so the mobile station can report an appropriate CQI according to the receive environment of HS-PDSCH to the base station without being influenced by the fading environment. As a result, the throughput of the communication system can be improved without making quality unnecessarily high unlike the case of the prior art.

(B) Second embodiment

Fig. 4 is a block diagram depicting a mobile station of the second embodiment. The same elements as those of the first embodiment in Fig. 1 are denoted with the same reference numbers. The differences are (1) the SIR offset value/fading velocity correspondence table 64, fading velocity/SIR offset conversion section 65 and CPICH-SIR correction control section 66 are deleted, (2) instead a CQI/CPICH-SIR conversion table 81 for converting CPICH - SIR into CQI corresponding to each of a plurality of fading velocities is provided, and (3) a CPICH-SIR/CQI report value conversion section 82 converts CPICH-SIR into a CQI report value and outputs it, using a table corresponding to the measured fading velocity $F_v$.

The CQI/CPICH-SIR conversion table 81 for converting CPICH - SIR into CQI is provided corresponding to each of the plurality of fading velocities, as shown in A, B and C in Fig. 5. The CQI/CPICH-SIR table A of the fading velocity 0Km/h is same as the corresponding table shown in Fig.15. The CQI/CPICH-SIR table B of the fading velocity 60Km/h for example, is created as follows. At first a CQI report value ($CQI_0$) corresponding to a predetermined CPICH-SIR is acquired, when the fading velocity is 0Km/h. Then a CPICH-SIR ($SIR_{60}$) after the fading velocity is changed from 0Km/h to velocity 60Km/h. At this time, the CQI report value ($CQI_0$) is regarded as the CQI report value of the measured CPICH-SIR ($SIR_{60}$) in a case where the fading velocity is 60Km/h. If the same processing is performed while changing CPICH-SIR from a 0 (dB) to 30 (dB) range, the CQI/CPICH-SIR conversion table B of the fading velocity 60km/h, is obtained. In the same way, the CQI/CPICH-SIR conversion table of the other fading velocities is obtained. In Fig. 5, three CQI/CPICH-SIR conversion tables are provided, but a CQI/CPICH-SIR conversion table may be created at every 10 Km/h fading velocity, for example.

The CPICH-SIR/CQI report value conversion section 82 converts the CPICH-SIR into a CQI report value using a table according to the fading velocity $F_v$ measured by the fading velocity measurement section 63, and outputs it. For example, if the fading velocity $F_v$ is 60Km/h, the CPICH-SIR/CQI report value conversion section 82 determines the CQI value using the CQI-CPICH/SIR conversion table B according to the fading velocity, and inputs the determined CQI report value to the HS-DPCCH generation section 58 so as to send it to a base station. If a table corresponding to the measured fading velocity $F_v$ does not exist, the CQI report value is determined by interpolation, or the CQI report value is determined using a table corresponding to a fading velocity close to the measured fading velocity $F_v$.

According to the second embodiment, a table for converting CPICH-SIR into a CQI report value is created corresponding to each of a plurality of fading environments, so an appropriate CQI according to the HS-PDSCH receive environment can be reported to the base station even under a fading environment. As a result, the throughput of the communication system can be improved without making quality unnecessarily high unlike the case of the prior art.

(C) Third embodiment

Fig. 6 is a block diagram depicting a mobile station of the third embodiment, and the same elements as those of the first embodiment in Fig. 1 are denoted with the same reference numbers. The differences are (1) the SIR offset value/fading velocity correspondence table 64, fading velocity/SIR offset conversion section 65 and CPICH-SIR correction control section 66 are deleted, (2) instead a CQI offset value/fading velocity correspondence table 91 is provided, so as to store the correspondence of the fading velocity $F_v$ and CQI offset value in advance, (3) a CQI offset value $\Delta CQI$ according to the fading velocity $F_v$ is determined by the fading velocity/CQI offset conversion section 92 using the CQI offset value/fading velocity correspondence table 91, and is output, and (4) a CQI correction section 93 corrects the CQI which is output from the CPICH-SIR/CQI report value conversion section 67, using the expression

$$CQI = CQI + \Delta CQI$$

and outputs it. Fig. 7 is an example of the CQI offset value/fading velocity correspondence table, which is created in such a manner that CQI at the time when the fading velocity $F_v$ is 0 and the CQI at the time when the fading velocity $F_v$ is a predetermined fading velocity are determined respectively, and the difference thereof is computed as a CQI offset at this predetermined fading velocity, then same processing is performed while changing the fading velocity from 0km/h to 120km/h resulting in acquisition of the CQI offset value/fading velocity correspondence table(see Fig. 18).

The corrected CQI report value in the third embodiment can be regarded as a correct CQI report value according to an actual SIR of the HS-PDSCH symbol even under a fading environment.

According to the third embodiment, the CQI correction section 93 can output a CQI report value according to the SIR of the HS-PDSCH symbol even under a fading environment. Therefore the mobile station can report an appropriate CQI according to the receive environment of the HS-PDSCH to a base station without being influenced by a fading environment. As a result, the throughput of the communication system can be improved without making quality unnecessarily high unlike the case of the prior art.

(D) Fourth embodiment

Fig. 8 is a block diagram depicting a base station of the fourth embodiment, and the same elements as those of the base station of the first embodiment in Fig. 3 are denoted with the same reference numbers. The differences are (1) a fading velocity measurement section 41 for measuring a fading velocity based upon a pilot signal included in a dedicated physical channel DPCH is provided, (2) a CQI offset value/fading velocity correspondence table 42 is provided so as to store the correspondence of the fading velocity $F_v$ and CQI offset value (See Fig.7) in advance, and (3) a CQI correction section 43 determines the CQI offset value $\Delta$CQI according to the fading velocity $F_v$ using the CQI offset value/fading velocity correspondence table 42, and adds it to the CQI which is output from the HS-DPCCH demodulation section 32 by expression

$$\text{CQI} = \text{CQI} + \Delta\text{CQI}$$

to make the correction, and outputs the corrected CQI.

The CQI report value in the fourth embodiment can be regarded as a correct CQI report value according to the actual SIR of the HS-PDSCH symbol even under a fading environment.

According to the fourth embodiment, the CQI correction section 43 can output a CQI report value according to the SIR of the HS-PDSCH symbol even under a fading environment. Therefore a transmission rate can be determined using an appropriate CQI according to the receive environment of the HS-PDSCH without being influenced by the fading environment of the mobile station. As a result, the throughput of the communication system can be improved without making the quality unnecessarily high unlike the case of the prior art.

The fourth embodiment is a case where the CQI correction control by the mobile station in the third embodiment is performed by the base station, but the CQI correction control by the mobile station in the first embodiment or second embodiment may also be performed by the base station.

In the above embodiments, the receive quality of the CPICH symbol was measured as a receive environment of the mobile station, but the receive environment can also be measured by other means.

**Claims**

1. A communication apparatus for transmitting a parameter according to a receive environment to a transmission apparatus that changes a transmission rate based on said receive environment, comprising:

   a receive environment measurement unit for measuring said receive environment;
   a fading environment measurement unit for measuring a fading environment of the communication apparatus;
   a parameter correction unit for correcting said parameter according to said receive environment based on said fading environment; and
   a transmission unit for transmitting said parameter to the transmission apparatus.

2. The communication apparatus according to Claim 1, **characterized in that** said parameter correction unit comprises:
   a receive environment measurement value correction unit for correcting said receive environment measurement value based on said fading environment; and
   a parameter generation unit for generating said parameter according to said corrected receive environment measurement value.

3. The communication apparatus according to Claim 2, **characterized in that** said receive environment measurement value correction unit comprises:

an offset generation unit for generating an offset value of said receive environment measurement value based on said fading environment; and
an addition unit for adding said offset value and said receive environment measurement value.

4. The communication apparatus according to Claim 1, **characterized in that** said parameter correction unit further comprises:
a receive environment measurement value/parameter conversion table that is created corresponding to each of a plurality of fading environments and is used for converting said receive environment measurement value into said parameter; and
a conversion unit for converting said receive environment measurement value into said parameter using the table according to said measured fading environment.

5. The communication apparatus according to Claim 1, **characterized in that** said parameter correction unit further comprises:

a parameter generation unit for generating said parameter according to said receive environment measurement value;
an offset generation unit for generating an offset value of said parameter based on a fading velocity; and
an addition unit for adding said offset value to said parameter.

6. A mobile station for transmitting a CQI according to a receive environment to a base station that switches a transmission rate based on said receive environment, comprising:

a receive quality measurement unit for measuring said receive environment based on a receive quality of a CPICH symbol;
a fading velocity measurement unit for measuring a fading environment in a mobile station using a fading velocity;
a CQI correction unit for correcting CQI according to said receive quality based on said fading velocity; and
a transmission unit for transmitting said corrected CQI to a transmission apparatus.

7. The mobile station according to Claim 6, **characterized in that** said CQI correction unit comprises:

a receive quality correction unit for correcting said receive quality based on said fading velocity; and
a CQI generation unit for generating said CQI according to said corrected receive quality.

8. The mobile station according to Claim 6, **characterized in that** said CQI correction unit further comprises:

a receive quality/CQI conversion table that is created corresponding to each of a plurality of fading velocities and is used for converting said receive quality into said CQI; and
a conversion unit for converting said receive quality into said CQI using the table according to said measured fading velocity.

9. The communication apparatus according to Claim 6, **characterized in that** said CQI correction unit further comprises:

a CQI generation unit for generating said CQI according to said receive quality;
an offset generation unit for generating an offset value of said CQI based on a fading velocity; and
an addition unit for adding said offset value to said CQI.

10. A transmission apparatus for obtaining a parameter according to a receive environment of a receive apparatus and switching a transmission rate based on said parameter, comprising:

a receive unit for receiving said parameter from the receive apparatus;
a fading environment measurement unit for measuring a fading environment of the receive apparatus;
a parameter correction unit for correcting said parameter based on said fading environment; and
a transmission control unit for switching a transmission rate based on said corrected parameter.

11. A base station for obtaining CQI according to a receive environment of a mobile station and switching a transmission rate based on said CQI, comprising:

a receive unit for receiving said CQI from the mobile station;
a fading velocity measurement unit for measuring a fading velocity of the mobile station;
a CQI correction unit for correcting said CQI based on said fading velocity; and
a transmission control unit for switching a transmission rate based on said corrected CQI.

## FIG. 1

EP 1 858 177 A1

# FIG. 2

EP 1 858 177 A1

# FIG. 3

| CQI | NUMBER OF TBS BITS | NUMBER OF CODES | MODULATION TYPE |
|---|---|---|---|
| 1 | 137 | 1 | QPSK |
| 2 | 173 | 1 | QPSK |
| 3 | 233 | 1 | QPSK |
| ... | ... | ... | ... |
| 14 | 2583 | 4 | QPSK |
| 15 | 3319 | 4 | QPSK |
| 16 | 3565 | 5 | 16-QAM |
| 17 | 4189 | 5 | 16-QAM |
| ... | ... | ... | ... |
| 29 | 24222 | 15 | 16-QAM |
| 30 | 25558 | 15 | 16-QAM |

**FIG. 4**

EP 1 858 177 A1

# FIG. 5

EP 1 858 177 A1

# FIG. 6

Receive signal → RECEIVER (51)

HS-PDSCH → HS-PDSCH SYMBOL BUFFER (53) → HS-PDSCH CHANNEL COMPENSATION PROCESSING SECTION (54) → DEMODULATION PROCESSING SECTION (55) → DECODING PROCESSING SECTION (56) → CRC COMPUTING SECTION (57) → DATA

HS-PDSCH CHANNEL ESTIMATION FILTER (52) → Channel estimation → HS-PDSCH CHANNEL COMPENSATION PROCESSING SECTION (54)

CPICH → CPICH CHANNEL ESTIMATION FILTER (59) → Channel estimation → CPICH CHANNEL COMPENSATION PROCESSING SECTION (60) → DEMODULATION PROCESSING SECTION (61) → CPICH-SIR CALCULATION PROCESSING SECTION (62) → CPICH-SIR → CPICH-SIR/CQI REPORT VALUE CONVERSION SECTION (67) → CQI REPORT VALUE → CQI CORRECTION SECTION (93) → CQI REPORT VALUE AFTER CORRECTION → HS-DPCCH GENERATION SECTION (58)

ACK/NACK → HS-DPCCH GENERATION SECTION (58)

CPICH → FADING VELOCITY MEASUREMENT SECTION (63) → FADING VELOCITY/CQI OFFSET VALUE CONVERSION SECTION (92) → CQI OFFSET VALUE ΔCQI → CQI CORRECTION SECTION (93)

CQI OFFSET VALUE/FADING VELOCITY CORRESPONDENCE TABLE (91) → FADING VELOCITY/CQI OFFSET VALUE CONVERSION SECTION (92)

Receive timing signal → DOWN RECEIVE TIMING MONITORING SECTION (68) → UP TRANSMISSION TIMING MANAGEMENT SECTION (69) → HS-DPCCH GENERATION SECTION (58)

HS-DPCCH GENERATION SECTION (58) → ENCODING PROCESSING SECTION (70) → HS-DPCCH → MODULATION PROCESSING SECTION (71) → TRANSMITTER (72) → Transmission signal

17

## FIG. 7

# FIG. 8

# FIG. 9

# FIG. 10

*FIG. 11*

ONE FRAME (15 SLOTS, 10 ms)

MEASUREMENT PERIOD

ONE SLOT

ONE SUB-FRAME

ABOUT 7.5 SLOTS

TWO SLOTS

ONE SUB-FRAME

CPICH

SCH

HS-SCCH

HS-PDSCH

HS-DPCCH

ACK/NACK CQI

ACK/NACK CQI

ACK/NACK CQI

# FIG. 12

EP 1 858 177 A1

# FIG. 13

slot#n-1　　　　　slot#n　　　　　slot#n+1

| 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 |

FILTERING PROCESSING FOR HS-PDSCH CHANNEL ESTIMATION VALUE OF slot#n

HS-PDSCH CHANNEL ESTIMATE VALUE OF slot#n

| #0 | #1 | #2 | #3 | #4 | #5 | #6 | #7 | #8 | #9 |

HS-PDSCH CHANNEL COMPENSATION PROCESSING OF slot#n

HS-PDSCH SYMBOL OF slot#n

| #0 | #1 | #2 | #3 | #4 | #5 | #6 | #7 | #8 | #9 |

EP 1 858 177 A1

# FIG. 14

CPICH CHANNEL COMPENSATION
PROCESSING FOR
SIR CALCULATION OF slot#n

slot#n

slot#n-1

slot#n-2

CPICH SYMBOL

CPICH CHANNEL
ESTIMATE VALUE FOR
SIR CALCULATION OF slot#n

CPICH SYMBOL FOR
SIR CALCULATION OF slot#n

FILTERING PROCESSING FOR
CPICH CHANNEL ESTIMATE VALUE
FOR SIR CALCULATION OF slot#n

## FIG. 15

## FIG. 16

# FIG. 17

# FIG. 18

<table>
<tr><td colspan="2" align="center">**INTERNATIONAL SEARCH REPORT**</td><td>International application No.<br>PCT/JP2005/003867</td></tr>
</table>

| | |
|---|---|
| A. CLASSIFICATION OF SUBJECT MATTER<br>   Int.Cl⁷  H04B7/26 ||

According to International Patent Classification (IPC) or to both national classification and IPC

B. FIELDS SEARCHED

Minimum documentation searched (classification system followed by classification symbols)
   Int.Cl⁷  H04B7/24-7/26, H04Q7/00-7/36

Documentation searched other than minimum documentation to the extent that such documents are included in the fields searched
   Jitsuyo Shinan Koho        1922-1996   Jitsuyo Shinan Toroku Koho   1996-2005
   Kokai Jitsuyo Shinan Koho   1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 07-501678 A  (Motorola, Inc.),<br>16 February, 1995 (16.02.95),<br>Page 4, upper left column, line 1 to page 5,<br>lower right column, line 23; Fig. 8<br>& WO 1994/008402 A1      & US 5323421 A<br>& DE 4394943 C1 | 1,2,4<br>3,5 |
| Y | JP 2005-020770 A  (Hitachi, Ltd.),<br>20 January, 2005 (20.01.05),<br>Par. Nos. [0047] to [0055]<br>(Family: none) | 3,5,9 |
| X<br><br>Y | JP 2004-159284 A  (Matsushita Electric<br>Industrial Co., Ltd.),<br>03 June, 2004 (03.06.04),<br>Par. Nos. [0056] to [0063]<br>& WO 2004/025876 A1      & EP 1473853 A1 | 1,2,4,6-8,<br>10,11<br>3,5,9 |

☐  Further documents are listed in the continuation of Box C.        ☐  See patent family annex.

| | |
|---|---|
| *   Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>   27 April, 2005 (27.04.05) | Date of mailing of the international search report<br>   17 May, 2005 (17.05.05) |
|---|---|
| Name and mailing address of the ISA/<br>   Japanese Patent Office | Authorized officer |
| Facsimile No. | Telephone No. |

Form PCT/ISA/210 (second sheet) (January 2004)